# EUROPÄISCHE PATENTSCHRIFT

(11) **EP 1 182 086 B1**
(45) Veröffentlichungstag und Bekanntmachung des Hinweises auf die Patenterteilung: **30.11.2005**
(21) Anmeldenummer: 01810822.5
(22) Anmeldetag: 23.08.2001
(51) Int. Cl.: B60R 13/07, B62D 25/08

(54) **Bauteil in einem Kraftfahrzeug zur Sammlung von ablaufendem Wasser**
Water drain assembly for a vehicle
Ensemble collecteur d'eau pour un véhicule

(30) Priorität: 23.08.2000 CH 16402000
(43) Veröffentlichungstag der Anmeldung: 27.02.2002
(73) Patentinhaber: Weidmann Plastics Technology AG, 8640 Rapperswil (CH)
(72) Erfinder: Rohr, Patrick, 74190 Passy (FR); Demet, Fabien, 70290 Champagney (FR); Koster, Casper, 8640 Rapperswil (CH)
(74) Vertreter: Groner, Manfred

(56) Entgegenhaltungen:
- DE-A- 19 648 330
- DE-A- 19 921 871
- US-A- 4 750 780
- US-A- 5 692 953
- PATENT ABSTRACTS OF JAPAN Bd. 0080, Nr. 80 (M-289), 12. April 1984 (1984-04-12) & JP 58 224863 A (NISSAN JIDOSHA KK), 27. Dezember 1983 (1983-12-27)

## Beschreibung

Die Erfindung betrifft ein Bauteil in einem Kraftfahrzeug gemäss Oberbegriff des Anspruchs 1.

In Kraftwagen ist zur Ableitung des Wassers von der Windschutzscheibe an deren Unterkante jeweils ein Wasserabweiser, auch Wasserkasten genannt, angeordnet welcher das Wasser von der Windschutzscheibe in einen Kanal und in diesem seitlich ableitet.

Die gattungsbildende DE 199 21 871 A offenbart ein Bauteil, das eine Einheit aus einem Instrumententräger und einem Windlaufelement bildet. Das Windlaufelement, das den Wasserabweiser und den Träger zur Abstützung der Motorhaube bildet, ist mit Klemmen an kastenförmigen Teilen des Bauteils angebracht.

Die DE 196 48 330 A offenbart einen Wasserabweiser, der ebenfalls mit einem Träger für die Motorhaube eine Einheit bildet. Ähnliche Bauteile sind zudem durch die JP 58 224 863 A bzw. dem entsprechenden Patent Abstract of Japan Bd. 0080, Nr. 80 (M-289) und die US 4,750,780 A sowie die US 5,692,953 A bekannt geworden.

Der Erfindung liegt die Aufgabe zugrunde, ein Bauteil der genannten Art zu schaffen, das die Herstellung und die Montage vereinfacht. Die Aufgabe ist gemäss Anspruch 1 gelöst. Beim erfindungsgemässen Bauteil weist der Wasserabweiser einen unteren Rand auf, der an einem Rand des Trägers verschieblich ist. Durch Verschiebungen zwischen dem Wasserabweiser und dem Träger können nicht vermeidbare Toleranzen zwischen dem Träger und der Windschutzscheibe bzw. dem Wasserabweiser ausgeglichen werden. Das erfindungsgemässe Bauteil bildet somit eine Einheit, die den Wasserabweiser, den Träger sowie Dichtungsmittel umfasst, an welche die Motorhaube im geschlossenen Zustand angelegt ist. Bei der Montage müssen beim erfindungsgemässen Bauteil der Wasserabweiser, den Träger sowie die Dichtungsmittel nicht separat eingebaut werden, sondern können zusammen in einem vergleichsweise einfachen Montagevorgang eingebaut werden. Zudem ist die Lagerhaltung und der Transport einfacher, da die genannten Teile als Einheit gelagert und transportiert werden können. Die Einheit kann beim Hersteller vollständig hergestellt und ausgerüstet werden. Bei der Montage des Kraftwagens muss dann lediglich noch diese Einheit eingesetzt werden.

Nach einer Weiterbildung der Erfindung ist vorgesehen, dass der Träger brückenförmig und zwischen seitlichen Abstützstellen aus Kunststoff federelastisch ausgebildet ist. Dies hat den wesentlichen Vorteil, dass auf die bisher übliche harte Abstützung der Motorhaube auf einer aus Blech hergestellten Schottwand verzichtet werden kann. Die Motorhaube ist auf dem erfindungsgemässen Bauteil abgestützt und bei einem Unfall mit einem Fussgänger kann bei einem Aufprall auf der Motorhaube diese an ihrem oberen Ende federelastisch nachgeben. Damit kann ein wesentlicher Beitrag für den Aufprallschutz für Fussgänger erreicht werden.

Die Herstellung des erfindungsgemässen Bauteils ist dann besonders günstig, wenn gemäss einer Weiterbildung die Dichtungsmittel eine angespritzte Dichtungslippe aus vergleichsweise weichem Kunststoff aufweisen. Die Dichtungslippe ist vorzugsweise lappenförmig ausgebildet und wird durch die Motorhaube federelastisch gespannt. Die angespritzte Dichtungslippe liegt unter Spannung dicht an der Unterseite der Motorhaube an. Vorzugsweise sind zwei im Abstand zueinander angeordnete Dichtungsmittel oberseitig am Träger angespritzt.

Ist gemäss einer Weiterbildung der Erfindung der Wasserabweiser ein vor dem Einbau aufklappbares, am Träger angelegtes Kunststoffteil, so kann dieses mit vergleichsweise kleiner Raumbeanspruchung gelagert und transportiert werden. Vor der Montage muss dann lediglich der Wasserabweiser nach oben geklappt und in die vorgesehene Stellung gebracht werden. Das Bauteil kann dann eingesetzt werden und braucht lediglich noch seitlich befestigt zu werden, beispielsweise durch Verrasten oder Anschrauben. Der Träger ist hierbei vorzugsweise als Abdeckung ausgebildet.

Zwei Ausführungsbeispiele der Erfindung werden nachfolgend anhand der Zeichnung näher erläutert. Es zeigen:
- Fig. 1: ein Schnitt durch ein erfindungsgemässes Bauteil, wobei die Windschutzscheibe und die Motorhaube lediglich angedeutet sind,
- Fig. 2: eine räumliche Ansicht eines erfindungsgemässen Bauteils, wobei auch hier die Windschutzscheibe lediglich angedeutet ist,
- Fig. 3 und 4: schematisch Vertikalschnitte durch eine Variante des Bauteils, einmal bei offener und einmal bei geschlossener Motorhaube,
- Fig.5: schematisch ein Teilschnitt durch das erfindungsgemässe Bauteil.

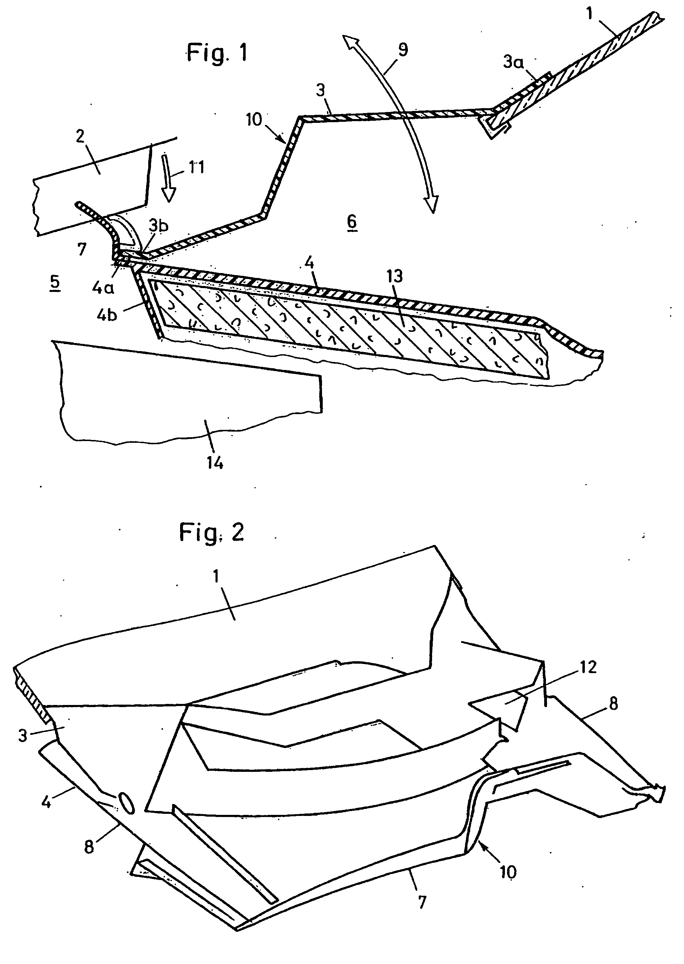

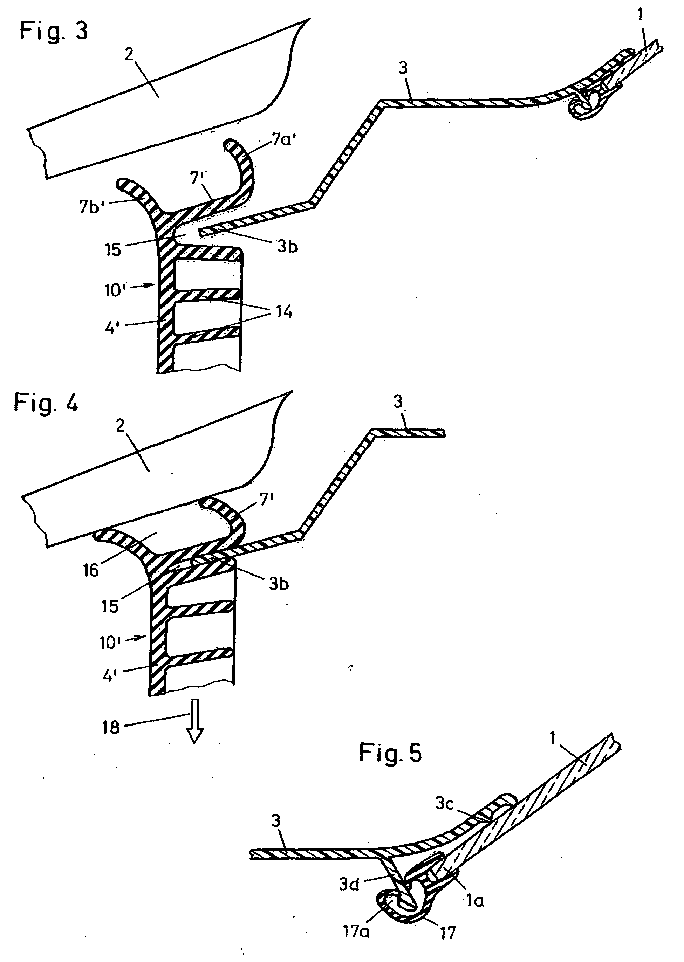

Das in den Fig. 1 und 2 gezeigte Bauteil 10 ist vorzugsweise vollständig aus Kunststoff, insbesondere aus recyklierbarem Polypropylen hergestellt. Es besteht im wesentlichen aus einem als Abdeckung ausgebildeten Träger 4, einem Wasserabweiser 3 sowie Dichtungsmitteln 7. Insbesondere die Fig. 1 zeigt, dass die Dichtungsmittel 7 an einem Rand 3b sowie einem Rand 4a des Wasserabweisers 3 bzw. des Trägers 4 angeordnet sind. Die Dichtungsmittel 7 sind als Dichtlippe ausgebildet und diese ist vorzugsweise am Bauteil 10 angespritzt. Vorzugsweise bestehen die Dichtungsmittel 7 aus einem Kunststoff, der weicher ist als derjenige des Wasserabweisers 3 und des Trägers 4. Die Dichtungsmittel 7, der Wasserabweiser 3 und der Träger 4 sind im Bereich der Ränder 3b und 4a fest aber in der Art eines Scharniers miteinander verbunden. Vor dem Montieren kann aufgrund der scharnierartigen Verbindung der Wasserabweiser 3 in den Richtungen des Doppelpfeiles 9 verschwenkt werden. Dies erlaubt für die Lagerhaltung und für den Transport eine Anordnung, bei welcher der Wasserabweiser 3 nach unten geklappt und an der Abdeckung 4 angelegt ist. Zur Montage wird dann der Wasserabweiser 3 in die in Fig. 1 gezeigte Position nach oben verschwenkt.

Im montierten Zustand ist das Bauteil 10 an den beiden seitlichen Rändern 8 an der Karosserie befestigt und abgestützt. Diese Ränder 8 können beispielsweise mit hier nicht gezeigten Schrauben an der Karosserie befestigt sein. Denkbar ist aber auch eine Ausführung, bei welcher das Bauteil 8 an der Karosserie aufgerastet ist. Zwischen den beiden Rändern 8 ist das Bauteil 10 frei und bildet eine Art Brücke zwischen den seitlichen Abstützstellen. Um eine hinreichende Stabilität zu gewähren, ist der Träger 4 räumlich ausgebildet und weist Verstärkungen 4b auf. Zudem ist vorgesehen, die Abdeckung 4 aus vergleichsweise hartem Kunststoff herzustellen. Denkbar ist auch eine Ausführung, bei welcher der Kunststoff der Abdeckung 4 durch Beigaben, beispielsweise Glasfasern verstärkt ist. Die Abdeckung 4 ist jedenfalls so ausgeführt, dass die Dichtungsmittel 7 beim Schliessen der Motorhaube 2 in Richtung des Pfeiles 11 gespannt werden kann. Die Abdeckung 4 ist aber doch so elastisch, dass sie bei einem Aufprall eines Fussgängers auf der Haube 2 nach unten etwas nachgeben kann. Die Kräfte beim Aufprall sind erfahrungsgemäss wesentlich grösser als die Kräfte, die zum Spannen von Dichtungsmitteln 7 erforderlich sind.

Der Wasserabweiser 3 weist einen oberen Rand 3a auf, der unter federelastischer Spannung an der Aussenseite der Windschutzscheibe 1 anliegt. Wasser auf der Aussenseite der Windschutzscheibe 1 gelangt über den Wasserabweiser 3 zum Rand 3b und wird an diesem seitlich abgeleitet. Zur Aufnahme eines hier nicht gezeigten Filters weist das Bauteil 10 eine Öffnung 12 auf. Unterhalb des Trägers 4 ist vorzugsweise eine akustische Dämmplatte 13 raumsparend angebracht. Unterhalb der Motorhaube 2 befindet sich der hier lediglich angedeutete Motor 14. In einem Raum 6 zwischen Träger 4 und Wasserabweiser 3 kann die hier nicht gezeigte Scheibenwischanlage angeordnet sein.

Die in den Fig. 3 bis 5 gezeigte Einheit 10' weist einen balkenförmigen Träger 4' aus Kunststoff auf, der an seinen beiden Enden an der Karosserie abgestützt ist. Er kann mit angeformten Verstärkungsrippen 14 versehen sein und weist oberseitige angespritzte Dichtungsmittel 7' auf, die aus vergleichsweise weichem Kunststoff hergestellt sind. Bei geöffneter Motorhaube 2 ragt der untere Rand 3b des Wasserabweisers 3 in eine Rille 15, die sich im wesentlichen über die ganze Länge des Trägers 4' erstreckt. Wird die Motorhaube 2 geschlossen, so werden von dieser die Dichtungsmittel 7' nach unten bewegt und der Rand 3b wird gemäss Fig. 4 in der Rille 15 festgeklemmt.

Die Dichtungsmittel 7' weisen zwei im Abstand zueinander angeordnete Lappen 7a' und 7b' auf, die bei geschlossener Motorhaube 2 einen Raum 16 bilden, der lärmdämmend wirkt. Die Lappen 7a' und 7b' sind bei geschlossener Motorhaube 2 gespannt und halten dadurch den Rand 3b fest. Die Klemmkraft ermöglicht jedoch eine Verschiebung des Randes 3b in Längsrichtung und den Querrichtungen des Trägers 4'. Durch solche Verschiebungen können die hier nicht vermeidbaren Toleranzen zwischen dem Träger 4' und der Windschutzscheibe 1 bzw. dem Wasserabweiser 3 ausgeglichen werden. Wird die Motorhaube 2 geöffnet, gehen die Dichtungsmittel 7' wieder in die in Fig. 3 gezeigte Lage zurück. Der Träger 4' könnte auch als Abdeckung gemäss den Fig. 1 und 2 ausgebildet sein.

Die Fig. 5 zeigt die Befestigung des Wasserabweisers 3 am unteren Rand 1a der Windschutzscheibe 1. Auf dem unteren Rand 1a ist eine Profilleiste 17 aufgesetzt, die einen Kanal 17a besitzt, in dem ein hackenförmiger Lappen 3d des Wasserabweisers 3 eingerastet ist. Eine Dichtungslippe 3c des Wasserabweisers liegt unter Spannung an der Aussenseite der Windschutzscheibe 1 an.

Wird der Träger 4' bei einem Unfall mit einem Fussgänger belastet, so kann dieser gemäss Fig. 4 in Richtung des Pfeiles 18 nach unten nachgeben, da er wie erwähnt, aus Kunststoff hergestellt und lediglich an seinen Enden an der Karosserie abgestützt ist.

## Patentansprüche

1. Bauteil in einem Kraftfahrzeug zur Sammlung von ablaufendem Wasser, das zwischen einer Windschutzscheibe (1) und einer Motorhaube (2) in einen Karosserieraum (5) fliesst, in dem ein Wasserabweiser (3) vorgesehen ist, welcher Wasser entlang einer Windschutzscheibenunterkante (1a) ableitet, mit einem Träger (4) zur Abstützung der Motorhaube (2), wobei das Bauteil eine Einheit (10) bildet, welche den Wasserabweiser (3), den Träger (4) sowie Dichtungsmittel (7) zur Motorhaube umfasst, **dadurch gekennzeichnet, dass** der Wasserabweiser (3) einen unteren Rand (3b) aufweist, der an einem Rand (4a) des Trägers (4) verschieblich ist, um Toleranzen auszugleichen.

2. Bauteil nach Anspruch 1, **dadurch gekennzeichnet, dass** der Träger (4) brückenförmig und zwischen seitlichen Abstützstellen (8) aus Kunststoff federelastisch ausgebildet ist.

3. Bauteil nach Anspruch 1 oder 2, **dadurch gekennzeichnet, dass** die Dichtungsmittel (7) als angespritzte federelastische Dichtungslippe ausgebildet sind.

4. Bauteil nach einem der Ansprüche 1 bis 3, **dadurch gekennzeichnet, dass** die Dichtungsmittel (7) im Querschnitt schräg nach oben gerichtet sind und durch die Motorhaube (2) federelastisch nach unten gespannt werden.

5. Bauteil nach einem der Ansprüche 1 bis 4, **dadurch gekennzeichnet, dass** der Wasserabweiser (3) scharnierartig mit dem Träger (4) verbunden ist und ein am Träger (4) aufklappbar angelegtes Kunststoffteil ist.

6. Bauteil nach einem der Ansprüche 1 bis 5, **dadurch gekennzeichnet, dass** die Dichtungsmittel (7) am Träger (4) angespritzt sind.

## Claims

1. Component in a motor vehicle for collecting draining water which flows between a windscreen (1) and a bonnet (2) into a body space (5) in which a water deflector (3) is provided which diverts water along a windscreen lower edge (1a), having a support (4) for supporting the bonnet (2), the component forming a unit (10) which comprises the water deflector (3), the support (4) and sealing means (7) for the bonnet, **characterized in that** the water deflector (3) has a lower edge (3b) which is displaceable on an edge (4a) of the support (4) in order to compensate for tolerances.

2. Component according to Claim 1, **characterized in that** the support (4) is bridge-shaped and is formed spring-elastically between lateral supporting points (8) of plastic.

3. Component according to Claim 1 or 2, **characterized in that** the sealing means (7) are designed as an injection-moulded, spring-elastic sealing lip.

4. Component according to one of Claims 1 to 3, **characterized in that** the sealing means (7) are directed obliquely upwards in cross section and are downwardly stressed in a spring-elastic manner by the bonnet (2).

5. Component according to one of Claims 1 to 4, **characterized in that** the water deflector (3) is connected in the manner of a hinge to the support (4) and is a plastic part placed in a hinged manner on the support (4).

6. Component according to one of Claims 1 to 5, **characterized in that** the sealing means (7) are injection-moulded on the support (4).

## Revendications

1. Ensemble dans un véhicule automobile pour collecter l'eau d'écoulement qui s'écoule entre un pare-brise (1) et un capot de moteur (2) dans un espace de carrosserie (5), dans lequel est prévu un déflecteur d'eau (3), lequel dévie l'eau le long d'une arête inférieure du pare-brise (1a), comprenant un support (4) pour supporter le capot de moteur (2), l'ensemble formant une unité (10) qui comprend le déflecteur d'eau (3), le support (4) ainsi que des moyens d'étanchéité (7) par rapport au capot de moteur, **caractérisé en ce que** le déflecteur d'eau (3) présente un bord inférieur (3b) qui peut glisser sur un bord (4a) du support (4) afin de compenser les tolérances.

2. Ensemble selon la revendication 1, **caractérisé en ce que** le support (4) est réalisé en plastique sous forme de pont et avec une élasticité à ressort entre des points de support latéraux (8).

3. Ensemble selon la revendication 1 ou 2, **caractérisé en ce que** les moyens d'étanchéité (7) sont réalisés sous forme de lèvre d'étanchéité élastique à ressort moulée par injection.

4. Ensemble selon l'une quelconque des revendications 1 à 3, **caractérisé en ce que** les moyens d'étanchéité (7) sont orientés en section transversale obliquement vers le haut et sont serrés vers le bas élastiquement par ressort par le capot de moteur (2).

5. Ensemble selon l'une quelconque des revendications 1 à 4, **caractérisé en ce que** le déflecteur d'eau (3) est connecté au support (4) par une espèce de charnière et est une pièce en plastique appliquée de manière rabattable sur le support (4).

6. Ensemble selon l'une quelconque des revendications 1 à 5, **caractérisé en ce que** les moyens d'étanchéité (7) sont moulés par injection sur le support (4).
